# EUROPEAN PATENT SPECIFICATION

(11) **EP 1 472 424 B1**
(45) Date of publication and mention of the grant of the patent: **07.05.2008**
(21) Application number: 02806743.7
(22) Date of filing: 02.12.2002
(51) Int. Cl.: E04H 4/12

(54) **MANAGEMENT ARRANGEMENT**
VERWALTUNGSANORDNUNG
DISPOSITIF DE GESTION

(30) Priority: 04.02.2002 ZA 200200955
(43) Date of publication of application: 03.11.2004
(73) Proprietor: Uvionconcept GmbH & Co. KG, 01920 Chemnitz (DE)
(72) Inventor: DE WET, Riccardo, Arthur, 7130 Gordon's Bay (ZA); CORTE, Daniel, Alfonso, 7140 Strand (ZA)
(74) Representative: Elbel, Michaela
(86) International application number: PCT/IB2002/005052
(87) International publication number: WO 2003/066999

(56) References cited:
- WO-A-00/42339
- WO-A1-00/42339
- US-A- 4 372 860
- US-A- 5 422 014
- US-A- 5 616 239
- US-A- 5 730 861
- US-A- 5 895 565
- US-A- 6 003 164
- US-A- 6 125 481

## Description

### FIELD OF INVENTION

The present invention relates to a management arrangement.

More particularly, the present invention relates to a management arrangement for regulating water in swimming pools.

### BACKGROUND TO INVENTION

Water contained in swimming pools needs to be treated on a regular basis, e.g. to prevent the water from stagnating and becoming infested with algae. This treatment requires the cleaning of the swimming pool filter, e.g. backwashing, and the addition of certain chemicals, such as acid and chlorine, to the water. These chemicals are corrosive and can be dangerous if not handled or stored correctly. If an excessive quantity of the chemicals is added to the water, the water will also become unbalanced and will display unwanted characteristics, e.g. such as becoming milky.

One method of overcoming these problems is to use a chlorinator unit, which generates chlorine by the dissociation of salt. This allows a regular supply of chlorine into the water without requiring constant supervision. However, a person must still manually backwash the swimming pool and check whether enough salt is available in the water for the chlorinator unit to operate.

WO 00/42339 describes an automatically controlled system for maintaining a swimming pool that highly reduces manual control of a user. This system employs sensor means, control means and regulating means to adjust preprogrammed values according to current input values. Water purification is accomplished by a mechanical filtration system and an ionising unit.

In addition to chemical purification methods ultra-violet radiation can be used for disinfection of swimming pool water as described in US 4,372,860.

It is an object of the invention to suggest a management arrangement, which will assist in overcoming these problems.

### SUMMARY OF INVENTION

According to the invention, a management arrangement for a swimming pool includes a number of sensors being adapted to measure variables and generate input data relating to a swimming pool; a processing unit being adapted to receive the input data and to generate output data; an actuator adapted to control an equipment in response to the output data; and an operator interface adapted to allow programming of operating parameters into the processing unit.

The equipment includes an ionising unit.

The arrangement also includes an ultra-violet unit.

The arrangement may include a swimming pool pump and a multi-valve port.

The ionising unit may be adapted to generate activated copper ions in swimming pool water.

The ultra-violet unit may include a germicidal lamp with an output of between 55 Watt and 115 Watt.

The arrangement may include a pool refill valve adapted to open or close a water supply for allowing extra water to be poured into the swimming pool.

The sensors may include at least one pH sensor for measuring the pH of the swimming pool water.

The sensors may include at least one temperature sensor for measuring the temperature of the swimming pool water.

The sensors may include at least one water level sensor for measuring the level of the swimming pool water.

The sensors may include at least one valve position sensor for determining the position of a multi-valve port.

The operator interface may include a local interface and a remote interface.

The local interface may include a display panel adapted to display a pH value of the swimming pool water.

The local interface may include a display panel adapted to display an operational status of the management arrangement.

The local interface may include a LCD display panel adapted to display a instructions on quantities of chemicals to be added to swimming pool water.

The remote interface may be used to program the processing unit with operating parameters.

The remote interface may be operatively connected to the processing unit via infra-red, radio or cellular signals.

The remote interface may be a remote control unit, a computer or a mobile telephone.

The management arrangement may include a battery.

Also according to the invention, a method of managing a swimming pool includes the steps of selecting a series of operating parameters relating to a swimming pool; of measuring variables relating to a swimming pool; of comparing the variables with the operating parameters to determine a status of the swimming pool; of displaying the status on an operator interface; and of providing instructions on altering the variables to maintain an optimal status.

The method may include the step of generating an alarm if the status varies sufficiently from the optimal status.

The method may include the step of automatically backwashing a swimming pool as discrete time intervals.

The method includes the steps of activating purification equipment, such as a ionisation unit and a ultra-violet unit, in accordance with the operating parameters.

The invention also extends to the combination of a swimming pool and a management arrangement as set out herein.

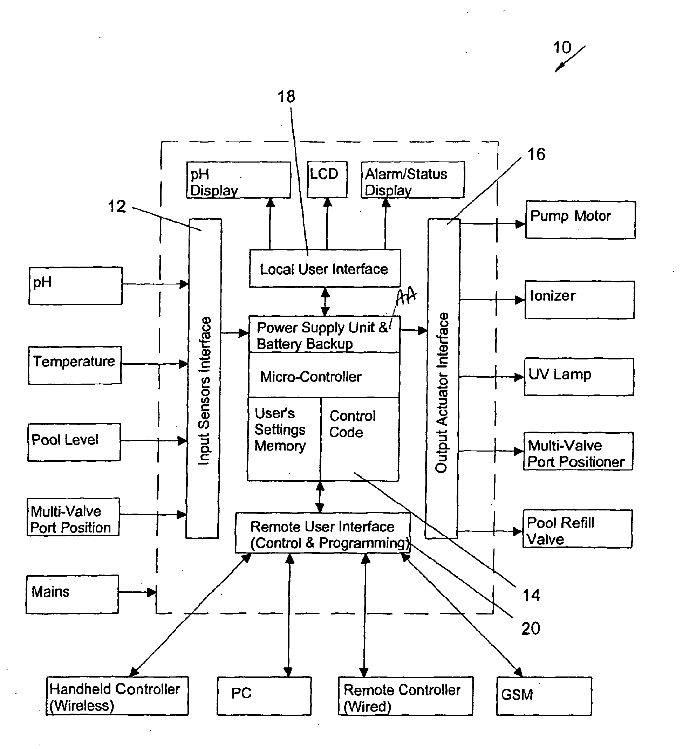

### BRIEF DESCRIPTION OF THE DRAWING

The invention will now be described by way of example with reference to the accompanying schematic drawing.

In the drawing there is shown a block diagram of a management arrangement in accordance with the invention.

### DETAILED DESCRIPTION OF THE DRAWING

Referring to the drawing, a block diagram of a management arrangement in accordance with the invention, generally indicated by reference numeral 10, is shown. The management arrangement 10 is used for regulating the purity and flow of water in swimming pools and is operatively joined to a swimming pool pump and filter. The pump is provided with a multi-valve port having commonly known functions such as "filter", "backwash", "rinse", "waste", and "bypass".

The management arrangement 10 includes an input sensor interface 12 adapted to receive input data regarding the pH, temperature and water level of the swimming pool water, and the selected function of the multi-valve port. The input data is transmitted to a micro-controller 14, which is programmed with software adapted to interpret the information. The software is programmable with certain settings , e.g. the duration of operation of the swimming pool pump, the frequency that the filter should be backwashed, etc. The micro-controller 14 is further operatively joined to an output actuator interface 16, a local operator interface 18 and a remote operator interface 20.

The output actuator interface 16 is used to operate water purity and flow equipment, such as the swimming pool pump, the multi-valve port, an ionising unit, an ultra-violet unit and a pool refill valve.

The local operator interface 18 displays information regarding the input data and the operational status of the management arrangement 10. The remote operator interface 20 is used to control the operation of the management arrangement 10 and to program the required settings into the software of the micro-controller 14.

During use, a person activates the management arrangement 10 and enters the required settings into the software. The management arrangement 10 will then automatically activate the swimming pool pump at the programmed intervals and filter the swimming pool water. While idling between the filtration cycles, the pH of the water is displayed on the local user interface 18. The water level of the pool is also checked and, if required, is topped up by opening the pool refill valve.

The pH value of the water is constantly monitored. When the pH value varies from the ideal value, an indicator on the local operator interface 18 will burn red or yellow. The indicator will burn constantly and will start flashing when the weekly maintenance time arrives. The management arrangement 10 guides a person through the maintenance procedure by displaying the steps to be followed on a LCD (liquid crystal display) on the local operator interface 18. The user will be prompted to add the correct amount of chemical needed to balance the pool (according to the programmed pool size and the actual pH value).

During a filtration cycle, the swimming pool pump is started, the ionising unit is switched on. After water circulation has commenced, the ultra-violet unit is switched on.

The ionising unit can operate in a boost, summer or winter setting. The boost setting is primarily for new swimming pools where maximum ionisation is required. After the swimming pool is stabilised the ionisation setting is reduced and regulated to ensure that the correct amount of activated copper ions are present in the water as the water temperature fluctuates between summer and winter temperatures. The amount of ionisation is displayed on the local operator interface.

The ultra-violet unit has a germicidal lamp with an output of between 55 Watt and 115 Watt and functions to destroy all water borne bacteria passing therethrough. The ultra-violet unit allows chemical-free disinfection of the water and is also able to remove combined chlorine molecules (chloramines and organic pollutants).

A backwash cycle can be performed either after the termination of each filtration cycle or after termination of the last filtration cycle in each day.

The management arrangement 10 automatically operates multi-valve port, i.e. filter - backwash - rinse - filter, and also switches the swimming pool pump on and off as needed.

The management arrangement 10 is further provided with a secondary battery power supply, so that in the event of a mains power failure, any backwash cycle is terminated and the multi-valve port is returned to its filter position, thereby assuring that no water drains out from the swimming pool. Although a person's settings are retained and the real time clock is unaffected, the ionising and ultra-violet units will be suspended until the mains power is restored.

A person can bypass any programming schedule with a "manual" mode. This allows any test/maintenance of the swimming pool to be performed under their supervision. A wireless hand held remote controller is provided so that the person does not need to open the management system's enclosure to program or fully control the manual operation.

The management arrangement 10 can be interfaced with digital communication equipment such as computers and cellular devices to allow automated remote control.

## Claims

1. A management arrangement for a swimming pool (10), which includes a number of sensors to measure variables and generate input data relating to a swimming pool; a processing unit (14) to receive the input data and to generate output data; an actuator (16) to control an equipment in response to the output data; an operator interface to allow programming of operating parameters into the processing unit (14); an ultra-violet unit, **characterized in that** the equipment includes an ionising unit.

2. A management arrangement (10) as claimed in claim 1, in which the ionising unit generates activated copper ions in swimming pool water.

3. A management arrangement (10) as claimed in claim 1, in which the ultra-violet unit includes a germicidal lamp with an output of between 55 Watt and 115 Watt.

4. A management arrangement (10) as claimed in any one of the preceding claims, in which the equipment includes a pool refill valve adapted to open or close a water supply for allowing extra water to be poured into the swimming pool.

5. A management arrangement (10) as claimed in any one of the preceding claims, in which the sensors include at least one valve position sensor for determining the position of a multi-valve port.

6. A management arrangement (10) as claimed in any one of the preceding claims, in which the operator interface includes a local interface (18) and a remote interface (20).

7. A management arrangement (10) as claimed in claim 6, in which the local interface (18) includes a display panel to display a pH value of the swimming pool water and/or a display panel to display an operational status of the management arrangement (10).

8. A management arrangement (10) as claimed in claim 6, in which the remote interface (20) is used to program the processing unit (14) with operating parameters.

9. A method of managing a swimming pool using the management arrangement (10) of any of claims 1-8, which includes the steps of selecting a series of operating parameters relating to a swimming pool; of measuring variables relating to a swimming pool; of comparing the variables with the operating parameters to determine a status of the swimming pool; of displaying the status on an operator interface; of providing instructions on altering the variables to maintain an optimal status; and of activating purification equipment, wherein the purification equipment is an ionisation unit and an ultra-violet unit.

10. A method as claimed in claim 9, which includes a step of generating an alarm if the status varies sufficiently from the optimal status.

## Patentansprüche

1. Managementanordnung für ein Schwimmbad (10), die eine Anzahl an Sensoren, um Variablen zu messen und Eingangsdaten zu erzeugen, die ein Schwimmbad betreffen; eine Verarbeitungseinheit (14), um die Eingangsdaten zu empfangen und um Ausgangsdaten zu erzeugen; ein Bedienungselement (16), um eine Ausstattung als Antwort auf die Ausgangsdaten zu kontrollieren; eine Operatorschnittstelle, um ein Programmieren von Betriebsparametern in die Verarbeitungseinheit (14) zu ermöglichen; eine Ultraviolett-Einheit einschließt, **dadurch gekennzeichnet, dass** die Ausstattung eine lonisierungseinheit einschließt.

2. Managementanordnung (10) wie in Anspruch 1 beansprucht in der die lonisierungseinheit aktivierte Kupferionen im Schwimmbadwasser erzeugt.

3. Managementanordnung (10) wie in Anspruch 1 beansprucht, in der die Ultraviolett-Einheit eine keimtötende Lampe mit einer Ausgabe von zwischen 55 Watt und 115 Watt einschließt.

4. Managementanordnung (10) wie in einem der vorhergehenden Ansprüche beansprucht, in der die Ausstattung ein Poolwiederauffüllungsventil einschließt, das angepasst ist, um einen Wasserzulauf zu öffnen oder zu schließen, um zu ermöglichen, dass zusätzliches Wasser in das Schwimmbad gefüllt wird.

5. Managementanordnung (10) wie in einem der vorhergehenden Ansprüche beansprucht, in der die Sensoren mindestens einen Ventilpositionssensor zum Bestimmen der Position eines Mehrfach-Ventilanschlusses einschließen.

6. Managementanordnung (10) wie in einem der vorhergehenden Ansprüche beansprucht, in der die Operatorschnittstelle eine lokale Schnittstelle (18) und eine entfernt liegende Schnittstelle (20) einschließt.

7. Managementanordnung (10) wie in Anspruch 6 beansprucht, in der die lokale Schnittstelle (18) eine Bedienungsanzeige, um einen pH-Wert des Schwimmbadwassers anzuzeigen und/oder eine Bedienungsanzeige, um einen Betriebszustand der Managementanordnung (10) anzuzeigen, einschließt.

8. Managementanordnung (10) wie in Anspruch 6 beansprucht, in der die entfernt liegende Schnittstelle (20) verwendet wird, um die Verarbeitungseinheit (14) mit Betriebsparametern zu programmieren.

9. Verfahren zum Managen eines Schwimmbads unter Verwendung der Managementanordnung (10) nach einem der Ansprüche 1-8, das die Schritte eines Auswählens einer Reihe von Betriebsparametern, die ein Schwimmbad betreffen; eines Messens von Variablen, die ein Schwimmbad betreffen; eines Vergleichens der Variablen mit den Betriebsparametern, um einen Zustand des Schwimmbads zu bestimmen; eines Anzeigens des Zustands an einer Operatorschnittstelle; eines Bereitstellens von Anleitungen zum Verändern der Variablen, um einen optimalen Zustand aufrecht zu erhalten; und eines Aktivierens einer Reinigungsausstattung umfasst, wobei die Reinigungsausstattung eine lonisierungseinheit und eine Ultraviolett-Einheit ist.

10. Verfahren wie in Anspruch 9 beansprucht, das einen Schritt eines Erzeugens eines Alarms einschließt, falls der Zustand ausreichend vom optimalen Zustand abweicht.

## Revendications

1. Un aménagement de gestion pour une piscine (10), qui comporte un nombre de capteurs pour mesurer des variables et générer des données d'entrée se rapportant à une piscine ; une unité de traitement (14) pour recevoir les données d'entrée et générer des données de sortie ; un actionneur (16) pour commander un équipement en réponse aux données de sortie ; une interface avec l'opérateur pour permettre toute programmation des paramètres de fonctionnement dans l'unité de traitement (14) ; une unité à rayons ultra-violets, **caractérisé en ce que** l'équipement comporte une unité ionisante.

2. Un aménagement de gestion (10) selon la revendication 1, **caractérisé en ce que** l'unité ionisante génère des ions de cuivre activés dans l'eau de la piscine.

3. Un aménagement de gestion (10) selon la revendication 1, **caractérisé en ce que** l'unité à rayons ultra-violets comporte une lampe germicide avec une sortie de 55 Watt à 115 Watt.

4. Un aménagement de gestion (10) selon l'une quelconque des revendications précédentes, **caractérisé en ce que** l'équipement comporte une vanne de recharge de la piscine apte à ouvrir ou fermer une alimentation hydraulique pour permettre à une quantité supplémentaire d'eau d'être déversée dans la piscine.

5. Un aménagement de gestion (10) selon l'une quelconque des revendications précédentes, **caractérisé en ce que** les capteurs comportent au moins un capteur de position de la vanne pour déterminer la position d'une entrée multivannes.

6. Un aménagement de gestion (10) selon l'une quelconque des revendications précédentes, **caractérisé en ce que** l'interface avec l'opérateur comporte une interface locale (18) et une interface de terminal (20).

7. Un aménagement de gestion (10) selon la revendication 6, dans lequel l'interface locale (18) comporte un écran d'affichage pour afficher une valeur pH de l'eau de la piscine et/ou un écran d'affichage pour afficher un état opérationnel de l'aménagement de gestion (10).

8. Un aménagement de gestion (10) selon la revendication 6, dans lequel l'interface à distance (20) est utilisée pour programmer l'unité de traitement (14) avec des paramètres de fonctionnement.

9. Une méthode de gestion d'une piscine utilisant l'aménagement de gestion (10) selon l'une quelconque des revendications 1 à 8, qui comporte les étapes de sélectionner une série de paramètres de fonctionnement se rapportant à une piscine ; de mesurer des variables se rapportant à une piscine ; de comparer des variables avec les paramètres de fonctionnement pour déterminer un état de la piscine ; d'afficher l'état sur une interface avec l'opérateur ; de donner des instructions sur l'altération des variables pour préserver un état optimal ; et de mettre en fonctionnement un équipement d'épuration, dans laquelle l'équipement d'épuration est une unité ionisante et une unité à rayons ultra-violets.

10. Une méthode selon la revendication 9, qui comporte une phase de génération d'une alerte si l'état varie suffisamment de l'état optimal.
